# FASCICULE DE BREVET EUROPEEN

(11) **EP 2 104 723 B1**
(45) Date de publication et mention de la délivrance du brevet: **29.01.2020**
(21) Numéro de dépôt: 07871829.3
(22) Date de dépôt: 11.12.2007
(51) Int. Cl.: C10G 3/00, C10G 45/02, C10G 49/00, C10G 65/04

(54) **PROCEDE D'HYDROTRAITEMENT D'UNE CHARGE GAZOLE**
VERFAHREN ZUM HYDROPROCESSING EINES GASÖL-EINSATZSTOFFS
METHOD FOR THE HYDROPROCESSING OF A GAS OIL FEEDSTOCK

(30) Priorité: 18.12.2006 FR 0611028
(43) Date de publication de la demande: 30.09.2009
(73) Titulaire: Total Raffinage France, 92400 Courbevoie (FR)
(72) Inventeur: MAYEUR, Vincent, F-76330 Notre Dame De Gravenchon (FR); VERGEL, César, F-76133 Maneglise (FR); MORVAN, Gildas, F-76290 Fontenay (FR); MARIETTE, Laurent, F-14800 Deauville (FR); HECQUET, Michael, 76930 Octeville sur Mer (FR)
(74) Mandataire: Fédit-Loriot
(86) Numéro de dépôt international: PCT/FR2007/002034
(87) Numéro de publication internationale: WO 2008/087279

(56) Documents cités:
- EP-A- 1 693 432
- EP-A2- 1 396 531
- WO-A1-2007/125332
- US-A- 3 248 316
- US-A- 3 793 190
- US-A- 4 016 070
- US-A- 4 929 781
- US-B1- 6 793 804

## Description

L'invention concerne un procédé d'hydrotraitement d'une charge gazole.

En raison de la sévérisation des normes antipollution pour les moteurs diesel, les spécifications des gazoles moteurs au cours des deux dernières décennies ont évolué et font apparaître de nouvelles contraintes qui ont conduit à une modification des formulations des mélanges de gazoles moteurs.

Depuis janvier 2005, les spécifications des gazoles moteurs sont les suivantes (norme européenne EN590) :
Masse volumique (à 15°C) : 820-845 kg/m3
T95% (Température de distillation de 95% du gazole) : 360 °C (maximale)
Teneur en soufre : 50mg/kg (maximale)
Cétane moteur : 51 (minimum)
Cétane calculé (ASTM D4737) : 46 (minimum)
Point de trouble : < -5°C en hiver,
   < +5°C en été.

Les bases recherchées sont donc des bases légères, sans soufre, à indice cétane élevé, et distillant complètement avant 360°C.

Les objectifs sont de réduire encore la teneur en soufre jusqu'à une valeur inférieure à 10mg/kg d'ici 2009 et d'augmenter la valeur minimale du cétane moteur.

Une solution pour améliorer l'indice de cétane consiste à ajouter un additif pro-cétane. Il s'agit le plus souvent de nitrates d'alkyle qui interviennent dans les étapes élémentaires d'oxydation avant l'auto-inflammation du mélange. Ils réduisent ainsi le délai d'inflammation et permettent d'accroître l'indice de cétane de 3 à 5 points selon la quantité ajoutée. Ils sont toutefois d'autant moins efficaces que l'indice de cétane d'origine est faible.

Une autre solution consiste à ajouter au mélange un carburant de substitution, tel qu'un biocarburant, car les esters d'huiles végétales présentent généralement un bon indice de cétane.

De ce fait, la directive européenne 2003/30/CE vise notamment à promouvoir l'utilisation de biocarburants. Dans les transports, la communauté européenne a adopté un objectif de part de biocarburants de 5,75% du PCI (Pouvoir calorifique Inférieur) des carburants en 2010. C'est-à-dire que la quantité de biocarburant présente dans le mélange doit procurer 5,75% du PCI du mélange.

Actuellement, le gouvernement français a instauré une taxe : la TGAP (Taxe Générale des Activités Polluantes), qui concerne les carburants mis à la consommation sur le territoire français. Les carburants soumis à cette taxe sont le « SP95 », le « SP98 » et le « Gazole Moteur ». L'objectif de cette taxe est d'inciter l'incorporation de Biocarburant en augmentant progressivement le pourcentage du PCI (Pouvoir Calorifique Inférieur) apporté par la proportion de biocarburant de 1,75% en 2006 à 7,00% en 2010.

Cet ajout est réalisé sur la base énergétique et l'origine « Bio » des produits incorporés. Ainsi, l'ETBE (éthyl tertiobutyléther) voit son taux réduit puisqu'il ne contient que 47% d'éthanol (d'origine agricole) et un PCI inférieur à l'essence.

Pour les gazoles moteurs, les biocarburants les plus couramment utilisés sont les esters d'huile végétale, comme l'ester méthylique d'huile de colza (EMC).

Ces gazoles moteurs sont en général obtenus par mélange du biocarburant au gazole moteur après traitement de ce dernier. Ces mélanges sont ainsi souvent effectués par les distributeurs, juste avant la mise en distribution du carburant.

Les mélanges obtenus à partir d'esters méthyliques d'huile végétale présentent l'avantage d'un cétane conforme à la norme, mais leur densité (supérieure à 880 kg/m3) est très supérieure à la spécification de la norme, ce qui entraîne des difficultés de formulation à des taux d'incorporation élevés. Les esters éthyliques d'huiles végétales conduisent également à des mélanges trop lourds, sans oublier le problème de stabilité dans le temps.

On connaît déjà des procédés de raffinage de la biomasse qui ont été élaborés pour produire ces biocarburants. Ainsi, les documents US 4 992 605, US 5 705 722, EP 1 396 531 et SE 520 633 décrivent des procédés d'hydrotraitement des triglycérides contenus dans les huiles végétales. Les réactions mises en œuvre sont toutefois fortement exothermiques. Afin de limiter les problèmes liés à cette forte exothermicité, il est nécessaire de faire re-circuler jusqu'à 80% de la charge en sortie du réacteur d'hydrotraitement, à l'entrée de celui-ci, d'où la nécessité de la réalisation d'une installation nouvelle dédiée à ce procédé d'hydrotraitement, et de surdimensionner hydrauliquement cette unité par rapport à la quantité de la charge réellement traitée.

Par ailleurs, la demande de brevet EP 1 693 432 décrit un procédé d'hydrotraitement d'un mélange d'une charge d'origine pétrolière et d'une charge d'origine biologique. Néanmoins, les réactions d'hydrodéoxygénation des triglycérides étant plus rapides que celles d'hydroraffinage des coupes pétrolières, le traitement d'un tel mélange de charges d'origine pétrolière et biologique en tête du réacteur provoque une baisse de la pression partielle en hydrogène et donc une baisse de l'activité catalytique en hydrotraitement de la charge pétrolière. De plus, des réactions parallèles durant l'hydroraffinage des triglycérides, conduisent à la production de gaz tels que le dioxyde de carbone CO₂, le méthane CH₄, et l'oxyde de carbone CO qui est considéré comme un inhibiteur réversible de l'activité désulfurante du catalyseur. Or, dans une unité d'hydrotraitement classique, ces gaz contenant l'hydrogène H₂ (gaz de recycle) sont le plus souvent séparés de l'effluent sortant du réacteur, puis réinjectés dans le réacteur après passage dans un système de traitement. La présence de CO dans le gaz de recycle s'avère donc pénalisante pour les réactions d'hydroraffinage de la coupe pétrolière.

La demanderesse a proposé dans sa demande de brevet français 06.06892 un procédé d'hydrotraitement d'un mélange d'une charge d'origine pétrolière de type gazole et d'une charge d'origine biologique du type huiles végétales et/ou graisses animales, sans dispositif de recycle d'effluent liquide en tête de réacteur. Ce mélange est introduit en tête de réacteur, à la manière d'une charge usuelle. Le procédé décrit dans cette demande, dans l'une de ses variantes, comporte une unité de séparation et de traitement du monoxyde de carbone présent dans les gaz de recycle.

Néanmoins, il existe toujours un besoin dans la technique d'améliorer les performances du procédé d'hydrotraitement d'un mélange d'une charge d'origine pétrolière et d'une charge d'origine biologique, tout en limitant la formation de gaz du type CH₄, ainsi que H₂O.

Notamment, lorsque l'on ajoute des triglycérides dans une charge gazole, il est nécessaire d'augmenter la quantité d'hydrogène H₂ fournie afin de couvrir une consommation accrue de H₂, et d'augmenter la température de la réaction, ou le volume catalytique, si l'on souhaite maintenir la même activité en hydrodésulfuration (HDS), c'est-à-dire si l'on souhaite atteindre le même taux de soufre en sortie par rapport à une HDS classique.

Cependant, une température de réaction plus élevée entraîne une réduction de la durée d'un cycle, de sorte qu'il est préférable de pouvoir diminuer cette température afin d'augmenter cette durée. Il est également préférable de limiter la consommation de H₂ pour des raisons d'économie.

On connaît du document WO2007/125332 un procédé d'hydroconversion d'un mélange d'huiles organiques de différentes origines dans une unité d'hydrotraitement traditionnelle, comprenant au moins deux lits catalytiques dans des conditions de procédé modérément sévères, afin d'obtenir une huile combustible diesel. Le procédé comprend l'injection d'huile d'origine animale ou végétale, avec des débits ajustés de manière indépendante, à partir du second lit catalytique de l'unité d'hydrotraitement, conformément aux variations de température observées dans chacun des lits catalytiques suivant le premier lit.

L'invention propose un procédé d'hydrotraitement catalytique d'une charge d'origine pétrolière de type gazole et d'une charge d'origine biologique à base d'huiles végétales et/ou graisses animales dans une unité d'hydrotraitement en lit fixe, ledit procédé étant caractérisé en ce que la charge d'origine pétrolière est introduite dans ladite unité en amont de la charge d'origine biologique et en ce que la vitesse spatiale VVH de la charge d'origine pétrolière est inférieure à la vitesse spatiale de la charge d'origine biologique, en mélange avec l'effluent issu du traitement de la charge d'origine pétrolière.

La présente demande décrit également une unité d'hydrotraitement pour la mise en œuvre dudit procédé, et une unité d'hydroraffinage correspondante.

On entend, au sens de la présente invention, par charge d'origine biologique, toute charge renouvelable, définie couramment par le terme biomasse.

En raison de son introduction en amont de la charge d'origine biologique, le traitement de la charge d'origine pétrolière n'est pas perturbé par le traitement de la charge d'origine biologique. Il est alors possible de réaliser les réactions d'hydroraffinage de la coupe pétrolière dans des conditions plus favorables par rapport à une introduction conjointe des deux types de charge.

En effet, l'hydrodésulfuration de la charge d'origine pétrolière n'est pas perturbée par l'introduction de la charge d'origine biologique qui a lieu en aval. Ainsi, l'hydrodéoxygénation de la charge d'origine biologique a lieu en aval de l'hydrodésulfuration de la coupe pétrolière de sorte que cette dernière peut être menée sans l'effet inhibiteur du CO et des autres gaz formés lors de la réaction d'hydrodéoxygénation des triglycérides de la charge d'origine biologique, et de sorte que la pression partielle d'hydrogène ne sera pas abaissée par la réaction d'hydroraffinage de la charge d'origine biologique, ce qui permet de maintenir une activité catalytique élevée en hydrodésulfuration.

L'introduction en aval de la charge d'origine biologique permet également de réaliser l'hydrodéoxygénation de celle-ci dans des conditions plus favorables (pression partielle d'hydrogène plus faible, température plus faible, ...) qui limitent la formation de CH₄ et H₂O, ce qui diminue la consommation d'H₂ et l'exothermicité de la réaction.

En effet, les réactions de craquage qui surviennent lors de la déoxygénation de la charge d'origine biologique (par décarbonylation et/ou décarboxylation), conduisent au détachement d'un carbone en bout de chaîne, ce qui va induire un équilibre thermodynamique entre CO/CO₂/CH₄ par les réactions de « CO Shift » (CO+H₂O<->CO₂+H₂) et de méthanation du CO (CO+3H₂<->CH₄+H₂O) et du CO₂ (CO₂+4H₂<->CH₄+2H₂O).

De plus, le ratio CO/CO₂ est toujours piloté par la constante d'équilibre de la réaction de « CO shift ».

Ainsi, une diminution de la concentration en CO dont l'effet inhibiteur est problématique, en faveur de la concentration en CO₂, qui peut être plus facilement éliminé, par exemple par lavage aux amines, est obtenue par :
- la diminution de la pression partielle d'H₂, obtenue selon l'invention par le fait qu'une grande partie de l'hydrogène est consommée par l'hydrotraitement de la charge gazole, en amont de la section d'hydrodéoxygénation de la charge d'origine biologique,
- un temps de séjour plus court de la charge d'origine biologique, obtenu selon l'invention par le fait que l'on peut diminuer le volume catalytique en aval de la zone d'injection de la charge biologique,
- un traitement de la charge d'origine biologique à la température la plus basse possible, ce qui peut être obtenu dans une variante de l'invention décrite plus loin,
- l'ajout d'eau, qui peut être obtenu dans une autre variante de l'invention décrite plus loin,
- l'élimination du monoxyde de carbone du gaz de recycle de l'unité, tel que décrit plus loin.

Un autre avantage du procédé selon l'invention est la dilution de la charge d'origine biologique par la charge d'origine pétrolière partiellement hydrotraitée résultant de l'introduction de la charge d'origine biologique en aval de la charge d'origine pétrolière dans l'unité d'hydrotraitement.

En effet, l'hydrotraitement des charges d'origine biologique à base d'huiles végétales et/ou animales est fortement exothermique et nécessite un moyen de contrôle de la température de réaction tel que l'utilisation d'un volume important de dilution. De ce fait, jusqu'à présent, ces huiles végétales et/ou animales étaient traitées dans des unités dédiées, à recyclage d'effluent liquide élevé.

Il est ainsi possible de limiter, voire de supprimer le recyclage d'effluent liquide en utilisant le procédé selon l'invention par rapport aux procédés connus de raffinage d'une charge d'origine biologique seule.

Le procédé selon l'invention permet également:
- de minimiser de la formation de méthane (CH₄)
- d'améliorer les propriétés du gazole produit : cétane, densité, distillation ...,
- d'augmenter le volume de gazole produit avec une même charge d'origine pétrolière, ce qui répond parfaitement aux besoins actuels en Europe, où l'on manque de gazole.

Le procédé selon l'invention permet, de plus, d'utiliser des catalyseurs différents dans chacune des zones catalytiques où sont injectées les charges d'origine pétrolière et biologique : par exemple CoMo pour la zone d'hydroraffinage de la coupe pétrolière et de préférence NiMo pour la deuxième zone traitant les triglycérides.

Dans une première variante du procédé selon l'invention, l'unité d'hydrotraitement est formée d'un unique réacteur dans lequel les charges d'origine pétrolière et biologique sont injectées.

Cette variante présente l'avantage de permettre l'utilisation d'une unité d'hydrotraitement existante dans laquelle on aura ajouté une entrée pour la charge d'origine biologique.

Dans une deuxième variante, l'unité d'hydrotraitement est formée de deux réacteurs distincts, la charge d'origine pétrolière étant injectée dans le premier réacteur, et la charge d'origine biologique étant injectée dans le deuxième réacteur en mélange avec l'effluent liquide sortant du premier réacteur.

Cette variante présente l'avantage de permettre le traitement de la charge d'origine biologique à une température plus basse que la température de traitement de la charge d'origine pétrolière. En effet, l'hydrotraitement de la charge d'origine biologique peut se faire à une température plus faible, de sorte qu'il n'est pas nécessaire de chauffer beaucoup la charge pour la traiter. De plus, la majeure partie de l'hydrotraitement de la charge d'origine pétrolière a déjà eu lieu dans le premier réacteur, le second réacteur permet alors l'hydrofinissage du traitement de la charge d'origine pétrolière et ne nécessite pas de températures aussi élevées. Cet hydrofinissage permet d'obtenir une teneur en soufre beaucoup plus basse par rapport aux teneurs habituellement obtenues en hydroraffinage.

De plus, généralement, des réactions de recombinaison d'oléfines avec du H₂S, favorisées à haute température, sont à l'origine de la formation de mercaptans et rendent difficile l'obtention de gazole à très basse teneur en soufre. Or, des conditions de traitement à une température de réaction plus basse dans le deuxième réacteur sont favorables à la minimisation de ces réactions de recombinaison, ce qui permet d'obtenir un produit à très basse teneur en soufre (<3 ppm) ou de diminuer la sévérité dans le premier réacteur pour une cible de soufre produit donnée.

Cette température plus basse dans le second réacteur permet également d'améliorer la stabilité thermique de la charge d'origine biologique, en particulier lorsque l'effluent liquide sortant du premier réacteur est refroidi préalablement à son mélange avec la charge d'origine biologique. Il est notamment possible de récupérer la chaleur de cet effluent, et d'abaisser ainsi la température de ce dernier, pour chauffer la charge d'origine pétrolière, et le cas échéant la charge d'origine biologique, avant leur entrée dans leur réacteur respectif.

L'exothermicité de la réaction d'hydrotraitement de la charge d'origine biologique nécessite en outre un volume important de dilution qui est assuré par la charge d'origine pétrolière partiellement hydrotraitée, sortant du premier réacteur.

L'abaissement de la température du second réacteur favorise également une diminution de la production de CO (voir plus haut).

Enfin, mener les réactions d'hydrodésulfuration et les réactions d'hydrodéoxygénation dans deux réacteurs distincts permet une gestion indépendante des catalyseurs dans chacun des réacteurs, et rend possible la production de gazoles sans biomasse. On peut pour cela, soit isoler le second réacteur pour n'utiliser que le premier réacteur, soit arrêter l'alimentation en huiles végétales et/ou graisses animales et utiliser les deux réacteurs pour l'hydrotraitement de la charge gazole.

Dans une troisième variante du procédé selon l'invention, l'unité d'hydrotraitement est formée de deux réacteurs distincts. La charge d'origine pétrolière est injectée dans le premier réacteur et la charge d'origine biologique est injectée pour partie dans le premier réacteur, et pour partie dans le deuxième réacteur, et l'effluent liquide sortant du premier réacteur est injecté dans le deuxième réacteur.

Selon l'invention, la vitesse spatiale (WH) de la charge d'origine pétrolière est inférieure à la vitesse spatiale de la charge d'origine biologique, en mélange avec l'effluent issu du traitement de la charge d'origine pétrolière.

Dans les conditions du procédé (P, T°), la formation de CH₄ et H₂O est ainsi ralentie car les réactions sont limitées cinétiquement (voir les réactions de CO shift et de méthanation décrites plus haut). Il en résulte une consommation plus faible de H₂ et la production d'un gaz de recycle plus concentré en hydrogène.

Avantageusement, la charge d'origine pétrolière de type gazole est choisie parmi les coupes gazole provenant de la distillation d'un pétrole brut et/ou d'un brut synthétique issu du traitement des schistes bitumineux ou de pétroles bruts lourds et extra-lourds ou de l'effluent du procédé Fischer Tropsch, les coupes gazoles issues de différents procédés de conversion, en particulier, celles issues du craquage catalytique et/ou thermique (FCC, cokéfaction, viscoréduction...).

En particulier, on introduit la charge d'origine biologique à base d'huiles végétales et/ou de graisses animales jusqu'à un taux de 30% en masse.

Plus particulièrement, le taux de charge d'origine biologique à base d'huiles végétales et/ou de graisses animales est de préférence inférieur ou égal à 15 % en masse. En effet, l'introduction d'un tel taux de charge d'origine biologique n'affecte que très légèrement les propriétés à froid du produit final. En particulier, le point de trouble de l'effluent final ne présente, généralement, qu'un écart de 1°C par rapport à l'effluent obtenu sans injection de biomasse. Ce résultat, qui diffère de ce qu'aurait prédit les lois de mélanges, est très intéressant car il démontre la synergie, au cours du procédé selon l'invention, entre les deux types de charges.

L'introduction de taux élevés de charge d'origine biologique est permise grâce à l'utilisation de la charge d'origine pétrolière hydrotraitée comme diluant, sans la nécessité d'une re-circulation d'effluent liquide en amont de l'introduction de la charge d'origine biologique.

Les huiles végétales ou animales contenues dans la charge d'origine biologique utilisée selon l'invention sont composées majoritairement de triglycérides d'acides gras (>90% en poids), dont les longueurs de chaîne dépendent de la nature de l'huile utilisée. Elles peuvent également contenir des acides gras. Au sens de l'invention, les huiles végétales et graisses animales peuvent également contenir des esters d'acides gras.

Dans le cadre de l'invention, les huiles végétales et graisses animales peuvent être utilisées brutes. Mais elles sont préférentiellement raffinées afin d'éviter l'encrassement de l'unité d'hydrotraitement. Dans ce cas, on parle d'huiles dégommées, c'est-à-dire après retrait d'une grande partie des phospholipides.

Avantageusement, la zone catalytique d'injection de la charge d'origine biologique comprend un premier lit catalytique piège à métaux, connus en eux mêmes. Ces pièges à métaux sont généralement composés d'alumine macroporeuse. Le but d'utiliser un tel piège à métaux, commercialement connu est de débarrasser les huiles végétales et/ou graisses animales des éventuelles impuretés qu'elles contiennent (Na, K, Cl...).

Les huiles végétales peuvent en particulier être l'huile de palme, l'huile de soja, l'huile de colza, l'huile de tournesol, l'huile de lin, l'huile de son de riz, l'huile de maïs, l'huile d'olive, l'huile de ricin, l'huile de sésame, l'huile de pin, l'huile d'arachide, l'huile de palmiste, l'huile de coco, l'huile de babasu ou un mélange de deux ou plusieurs de ces huiles. Ces huiles vont produire essentiellement des paraffines en C₁₂ à C18.

L'huile de palme est particulièrement préférée, car c'est l'une des huiles comportant les chaînes carbonées les plus courtes, avec près de 50% de C16. Comme l'huile de palme est l'une des plus saturées, son hydrotraitement nécessite une quantité d'hydrogène moindre par rapport aux autres huiles. De plus, la stabilité thermique de l'huile de palme limite l'encrassement des échangeurs thermiques situés en amont du réacteur dans une unité d'hydroraffinage classique.

L'huile de palme présente en outre l'avantage d'avoir son profil centré sur celui de la charge gazole, ce qui limite la perturbation de ce dernier, d'être économique, et d'être peu utilisée pour l'alimentation humaine.

Comme graisses animales, on peut par exemple utiliser de la graisse de poisson, de l'huile animale (dénommée tall oil).

Une façon particulièrement avantageuse d'utiliser l'invention, est donc d'utiliser préférentiellement l'huile de palme ou toute autre huile végétale ou d'origine animale susceptible de produire par hydrotraitement un maximum de paraffines en C15 à C18 de façon à induire une augmentation importante de l'indice de cétane des charges produites tout en diminuant le plus possible la densité, et à mieux valoriser les bases à indice de cétane faible et densité élevée, telles que le LCO (« Light Cycle Oil ») qui se caractérise par une densité élevée et un indice de cétane très bas, et les gazoles issus de bruts acides qui présentent d'excellentes propriétés à froid mais ont comme caractéristiques de présenter une densité élevée et un faible indice de cétane.

Selon une caractéristique particulière de l'invention, on utilise une quantité d'hydrogène introduite dans la première zone catalytique de 50 à 1000 Normolitres de H₂ par litre de charge d'origine pétrolière, préférentiellement de 100 à 500 Normolitres de H₂ par litre de charge pétrolière, et encore plus préférentiellement de 120 à 450 Normolitres de H₂ par litre de charge d'origine pétrolière.

La couverture d'hydrogène dans la deuxième zone catalytique, selon une caractéristique particulière de l'invention, est de 50 à 2000 Normolitres de H₂ par litre de charge totale (charge d'origine biologique, en mélange avec l'effluent issu du traitement de la charge d'origine pétrolière), préférentiellement de 150 à 1500 Normolitres de H₂ par litre de charge totale, et encore plus préférentiellement de 200 à 1000 Normolitres de H₂ par litre de charge totale.

Selon une caractéristique particulière de l'invention, la température de la première zone catalytique de traitement de la charge d'origine pétrolière est de 320 à 420°C, de préférence de 340 à 400°C. Selon une autre caractéristique préférentielle de l'invention, la température de la deuxième zone catalytique de traitement de la charge d'origine biologique en mélange avec l'effluent issu du traitement de la charge d'origine pétrolière est de 250 à 420°C, de préférence de 280 à 350°C.

Selon une caractéristique particulière de l'invention, on traite les différentes charges à une pression de 25 à 150 bars, de préférence de 30 à 70 bars.

Selon une autre caractéristique de l'invention, la WH de la charge d'origine pétrolière, dans la première zone catalytique est de 0.3 à 5, de préférence de 0.6 à 3.

La WH, dans la deuxième zone catalytique, de la charge totale (charge d'origine biologique, en mélange avec l'effluent issu du traitement de la charge d'origine pétrolière) est de 0.5 à 10, de préférence de 1 à 5.

Avantageusement, selon l'invention, la charge d'origine pétrolière est injectée dans une première zone catalytique de l'unité d'hydrotraitement et la charge d'origine biologique est injectée dans une deuxième zone catalytique de l'unité d'hydrotraitement située en aval de la première zone catalytique.

Il est ainsi possible d'utiliser des catalyseurs spécifiques au niveau de chaque zone catalytique, et de favoriser ainsi les réactions d'hydrodésulfuration ou d'hydrodéoxygénation.

Selon une caractéristique particulière de l'invention, on traite la charge d'origine biologique sur au moins un lit catalytique dans l'unité d'hydrotraitement, le lit catalytique contenant au moins un catalyseur à base d'oxydes métalliques choisis parmi les oxydes des métaux du groupe VI-B (Mo, W...) et VIII-B (Co, Ni, Pt, Pd, Ru, Rh...) supportés sur un support choisi parmi l'alumine, silice alumine, zéolithe, ferrierite, alumine phosphatée, silice alumine phosphatée...De préférence, le catalyseur utilisé sera du NiMo, CoMo, NiW, PtPd, ou un mélange de deux ou plusieurs de ceux-ci. Le catalyseur utilisé peut également être à base de métaux à l'état massique tel que le catalyseur de type Nebula commercialement connu.

Selon une autre caractéristique particulière de l'invention, on traite la charge d'origine biologique introduite dans l'unité d'hydrotraitement sur au moins un lit catalytique contenant au moins pour partie un catalyseur avec une fonction isomérisante, à base d'oxydes de nickel sur un support acide tel que silice alumine amorphe, zéolithe, ferrierite, alumine phosphatée, silice alumine phosphatée...

Les lits catalytiques contenant des oxydes de NiW présentent en effet l'avantage de favoriser les réactions d'isomérisation, ce qui peut permettre d'améliorer, c'est-à-dire de réduire, le point de trouble du produit fini. En particulier, dans le cas d'une charge gazole comportant un point de trouble élevé, un lit catalytique contenant NiW, et de préférence des oxydes de NiW sur silice alumine amorphe, zéolithe, ferrierite, alumine phosphatée ou silice alumine phosphatée, en favorisant les réactions d'isomérisation, va permettre de réduire très nettement le point de trouble du produit fini.

Les lits catalytiques contenant des catalyseurs de type oxydes de NiMo ont un fort pouvoir hydrogénant et hydrodéoxygénant des triglycérides.

Avantageusement, la première zone catalytique destinée au traitement de la charge d'origine pétrolière contient un ou plusieurs lits de catalyseur contenant des catalyseurs qui présentent une bonne performance en hydrodésulfurisation, tandis que la deuxième zone catalytique destinée au traitement de la charge d'origine biologique contient un ou plusieurs lits de catalyseur contenant des catalyseurs présentant une bonne performance pour la déoxygénation des triglycérides de la charge (par exemple à base de NiMo) et/ou des catalyseurs favorisant les réactions d'isomérisation. De préférence, dans le dernier lit de la deuxième zone catalytique on utilisera un catalyseur avec une fonction isomérisante permettant d'améliorer les propriétés à froid du produit. Ce catalyseur pourra être composé d'oxydes de nickel sur un support acide tel que silice alumine amorphe, zéolithe, ferrierite, alumine phosphatée, silice alumine phosphatée...On utilisera préférentiellement NiW.

Avantageusement, on injecte de l'eau dans l'unité d'hydrotraitement au niveau de la zone de traitement de la charge d'origine biologique. Cette injection d'eau permet de déplacer l'équilibre de la réaction de « CO shift » vers la transformation du CO en CO₂, qui peut être beaucoup plus facilement éliminé. On favorise ainsi la conversion du CO produit par la réaction d'hydrodéoxygénation, vers du CO₂ et H₂, en limitant la réaction de méthanation qui produit le méthane CH₄, ce qui résulte en une diminution de l'exothermicité et de la consommation d'H₂.

Dans une variante particulièrement avantageuse du procédé comprenant un traitement de gaz de recycle issu de l'hydrotraitement de la charge totale avant sa réinjection dans l'unité d'hydrotraitement, on effectue un traitement supplémentaire du monoxyde de carbone présent dans ledit gaz de recycle.

Il est ainsi possible de ne pas réinjecter le monoxyde de carbone dans le réacteur pour ne pas risquer d'inhiber le catalyseur.

En particulier, un tel traitement du CO peut être mis en œuvre lorsque la teneur en CO des gaz de recycle atteint une valeur prédéterminée.

La séparation et le traitement du monoxyde de carbone peuvent être réalisés par l'introduction, dans le système de traitement des gaz de recycle, d'un dispositif de séparation et de traitement du monoxyde de carbone. En particulier, il est possible d'utiliser des équipements de conversion du CO (appelés « CO shift » par les spécialistes) tels que ceux généralement fournis par les fabricants d'unité d'hydrogène. Ainsi, de préférence, on traite le monoxyde de carbone au moyen d'une unité de conversion de CO utilisant la réaction de « CO shift ». On transforme ainsi le CO en CO2, qui peut être éliminé plus facilement.

Il est également possible d'utiliser une unité de traitement PSA (abréviation de Pressure Swing Adsorption - Adsorption par Variations de Pression). Cette technologie est connue en elle même. Les adsorbants sont sélectionnés en fonction de la nature des impuretés à éliminer des courants porteurs d'hydrogène, et qui sont dans notre cas le monoxyde de carbone CO et éventuellement le méthane CH₄, l'éthane C₂H₆, le propane C₃H₈ ...

Préférentiellement, les gaz ainsi séparés sont utilisés dans un vaporéformeur, tel qu'un vaporéformeur de méthane (« SMR » : Steam Methane Reformer). Le CO et les autres produits de la déoxygénation de la charge d'origine biologique, sont ainsi valorisés comme gaz de synthèse pour la production d'un gaz hydrogéné d'origine biologique. En utilisant cette configuration, le CO est donc valorisé et on n'est donc pas tenu, afin d'éviter son effet inhibiteur, de diminuer sa concentration en faveur de la concentration en CO₂ qui peut être plus facilement éliminé.

Avantageusement, on effectue en outre un traitement au cours duquel on sépare et on traite le dioxyde de carbone (CO₂) et l'hydrogène sulfuré (H₂S) présents dans ledit gaz de recycle avant la réinjection de ce dernier dans l'unité d'hydrotraitement. Ce traitement est par exemple réalisé par passage du gaz de recycle dans un absorbeur amine. Ce traitement supplémentaire permet donc d'éliminer du circuit les gaz à traiter, c'est à dire le CO₂ et l'H₂S.

Une autre façon particulièrement avantageuse d'utiliser l'invention, et là aussi dès que le taux d'huiles végétales et/ou de graisses animales est important, est de compenser l'exothermicité qui résulte nécessairement de l'ajout des ces huiles.

Ainsi, avantageusement, on contrôle l'exothermicité de l'hydrotraitement de la charge au moyen de systèmes de régulation thermique. Dans une unité d'hydrotraitement classique, il s'agit par exemple de l'amélioration de la distribution liquide/gaz, de quench gazeux et/ou liquides (c'est-à-dire l'apport de gaz ou liquides froids dans le réacteur), de répartition du volume de catalyseur sur plusieurs lits catalytiques, de gestion de préchauffe de la charge à l'entrée du réacteur, notamment par action sur le four et/ou les échangeurs de chaleur situés en amont du réacteur, sur des lignes de dérivation (by-pass), etc, pour abaisser la température à l'entrée du réacteur.

Selon une première variante de l'invention, on préférera l'ajout d'un liquide (quench liquide) pour gérer l'exothermicité.

Ce liquide peut par exemple être constitué d'une partie de la charge hydroraffinée sortant de l'unité d'hydroraffinage. Il est introduit au niveau de la zone de traitement de la charge d'origine biologique, en particulier lorsque l'unité d'hydrotraitement comprend un unique réacteur.

Lorsque l'unité d'hydrotraitement comprend deux réacteurs, ce liquide peut être constitué d'une partie de l'effluent du premier réacteur. Il est introduit, de même, au niveau de la zone de traitement de la charge d'origine biologique.

Selon une deuxième variante de l'invention dans laquelle deux réacteurs distincts sont utilisés, un système de régulation thermique consiste à récupérer de la chaleur de l'effluent sortant du premier réacteur afin d'abaisser sa température avant son injection dans le deuxième réacteur. Ceci permet de réaliser un important gain énergétique.

Avantageusement, selon l'invention, l'unité d'hydrotraitement fonctionne en une passe, sans recycle d'effluent liquide en tête de réacteur.

Il est également décrit une unité d'hydroraffinage comprenant au moins une unité d'hydrotraitement catalytique telle que décrite ci-après, pour la mise en œuvre du procédé selon l'invention.

Avantageusement, l'unité d'hydrotraitement catalytique comprend au moins un réacteur pourvu d'une première entrée pour l'introduction d'une charge d'origine pétrolière de type gazole et une deuxième entrée pour l'introduction d'une charge d'origine biologique à base d'huiles végétales et/ou animales, la deuxième entrée étant située en aval de la première entrée.

Avantageusement, l'unité d'hydrotraitement catalytique comprend une première zone catalytique destinée au traitement de la charge d'origine pétrolière, et une deuxième zone catalytique située en aval de la première zone catalytique et destinée au traitement de la charge d'origine biologique diluée par la charge d'origine pétrolière sortant de la première zone catalytique.

Dans un premier mode de réalisation, cette unité d'hydrotraitement catalytique comprend un unique réacteur.

Dans un second mode de réalisation, l'unité d'hydrotraitement catalytique comprend deux réacteurs distincts, un premier réacteur pourvu de ladite première entrée pour l'introduction de la charge d'origine pétrolière, et un deuxième réacteur pourvu de ladite deuxième entrée pour l'introduction de la charge d'origine biologique, ledit premier réacteur comprenant en outre une sortie de la charge d'origine pétrolière traitée, ladite sortie rejoignant ladite deuxième entrée du deuxième réacteur.
Dans un troisième mode de réalisation, l'unité d'hydrotraitement catalytique comprend deux réacteurs distincts, un premier réacteur pourvu de ladite première entrée pour l'introduction de la charge d'origine pétrolière et de ladite deuxième entrée pour l'introduction d'une partie de la charge d'origine biologique à base d'huiles végétales et/ou animales, la deuxième entrée étant située en aval de la première entrée, ledit premier réacteur comprenant en outre une sortie du mélange des deux charges traité, ladite sortie rejoignant l'entrée du deuxième réacteur, et le deuxième réacteur comprend une troisième entrée pour l'introduction d'une partie de la charge d'origine biologique.

De préférence, l'unité d'hydrotraitement catalytique comprend au moins un lit catalytique contenant au moins un catalyseur à base d'oxydes métalliques choisis parmi les oxydes des métaux du groupe VI-B (Mo, W...) et VIII-B (Co, Ni, Pt, Pd, Ru, Rh...) supportés sur un support choisi parmi l'alumine, silice alumine, zéolithe, ferrierite, alumine phosphatée, silice alumine phosphatée..., de préférence, du NiMo, CoMo, NiW, PtPd, ou un mélange de deux ou plusieurs de ceux-ci.

De préférence, l'unité d'hydrotraitement catalytique comprend au moins un lit catalytique contenant au moins pour partie un catalyseur avec une fonction isomérisante, de préférence à base d'oxydes de nickel sur un support acide tel que silice alumine amorphe, zéolithe, ferrierite, alumine phosphatée, silice alumine phosphatée...

De préférence, l'unité d'hydroraffinage comprend en outre un séparateur séparant les phases liquide et vapeur de l'effluent sortant de ladite unité d'hydrotraitement, et comprend, en aval du séparateur, une unité de séparation et de traitement du monoxyde de carbone (CO) présent dans la phase vapeur de l'effluent pour la mise en œuvre du procédé selon l'invention.

Préférentiellement, l'unité d'hydroraffinage comprend en aval du séparateur, une unité de séparation et de traitement du dioxyde de carbone (CO₂) et de l'hydrogène sulfuré (H₂S) présents dans la phase vapeur de l'effluent pour la mise en œuvre du procédé selon l'invention.

L'invention est maintenant décrite en référence aux dessins annexés, non limitatifs, dans lesquels :
- la figure 1 est un schéma simplifié d'une unité 1 d'hydroraffinage classique d'une charge de type gazole ;
- la figure 2 est un schéma simplifié d'une section de séparation d'une unité d'hydroraffinage classique ;
- la figure 3 un schéma simplifié d'une unité d'hydrotraitement selon un premier mode de réalisation de l'invention, comportant un unique réacteur.
- la figure 4 est un schéma simplifié d'une unité d'hydroraffinage comportant une unité d'hydrotraitement selon un deuxième mode de réalisation de l'invention, comportant deux réacteurs.

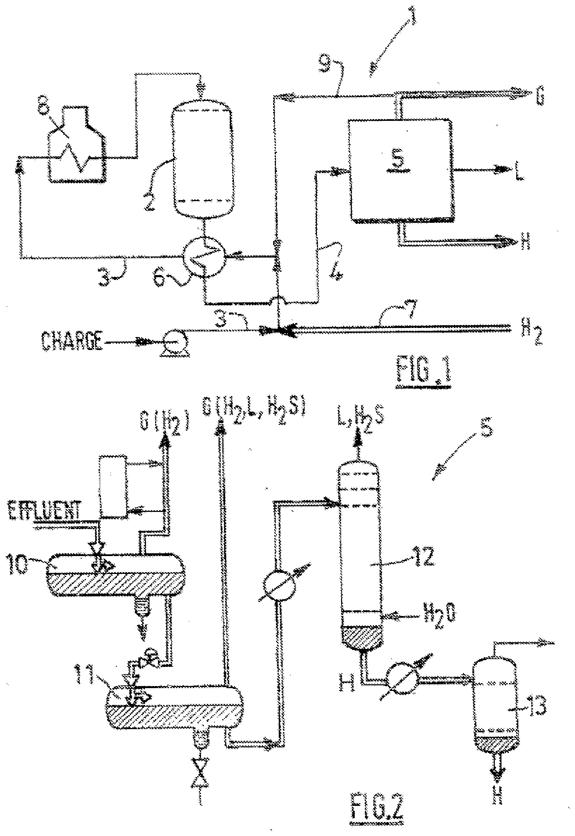

La figure 1 représente un schéma simplifié d'une unité 1 d'hydroraffinage classique d'une charge de type gazole. Cette unité 1 comprend un réacteur 2 dans lequel est introduit la charge à traiter au moyen d'une ligne 3. Ce réacteur contient un ou plusieurs lits de catalyseurs d'hydroraffinage.

Une ligne 4 récupère l'effluent en sortie du réacteur 2 et le conduit à une section de séparation 5.

Un échangeur de chaleur 6 est placé en aval du réacteur sur la ligne 4 afin de chauffer la charge circulant dans la ligne 3, en amont du réacteur.

En amont de cet échangeur de chaleur 6, une ligne 7, raccordée sur la ligne 3, apporte à la charge à traiter un gaz riche en H₂.

En aval de l'échangeur de chaleur 6, et en amont du réacteur 2, la charge mélangée au gaz riche en H₂ circulant dans la ligne 3 est chauffée par un four 8.

Ainsi, la charge est mélangée au gaz riche en hydrogène, puis portée à la température de réaction par l'échangeur de chaleur 6 et le four 8 avant son entrée dans le réacteur 2. Elle passe ensuite dans le réacteur 2, à l'état vapeur s'il s'agit d'une coupe légère, en mélange liquide-vapeur s'il s'agit d'une coupe lourde.

A la sortie du réacteur, le mélange obtenu est refroidi, puis séparé dans la section de séparation 5, ce qui permet d'obtenir :
- un gaz G acide riche en H₂S, dont une partie est réinjectée dans le gaz riche en H₂ mélangé à la charge, au moyen d'une ligne 9,
- des produits légers L qui résultent de la décomposition des impuretés. L'élimination du soufre, de l'azote, ... conduit en effet à une destruction de nombreuses molécules et à la production de fractions plus légères,
- un produit hydroraffiné H de volatilité proche de celle de la charge mais aux caractéristiques améliorées.

De manière classique, l'effluent sortant du réacteur 2 est refroidi et partiellement condensé, puis pénètre dans la section de séparation 5.

Une telle section de séparation 5 comprend généralement (figure 2) :
- un premier ballon séparateur 10 haute pression qui permet de séparer de l'effluent un gaz G(H₂) riche en hydrogène, ce gaz pouvant être recyclé,
- un deuxième ballon séparateur 11 basse pression (10 bars) qui sépare les phases liquide et vapeur obtenues par détente du liquide provenant du ballon haute pression 10. Le gaz G(H₂, L, H₂S) obtenu contient principalement de l'hydrogène, des hydrocarbures légers et une grande partie de l'hydrogène sulfuré qui s'est formé dans le réacteur,
- un stripper 12 dont la fonction est d'éliminer les hydrocarbures légers L et l'H₂S résiduel de la charge traitée. Le produit hydroraffiné H est soutiré en fond de ce stripper,
- un sécheur 13 permettant d'éliminer l'eau solubilisée par le produit hydroraffiné chaud dans le stripper.

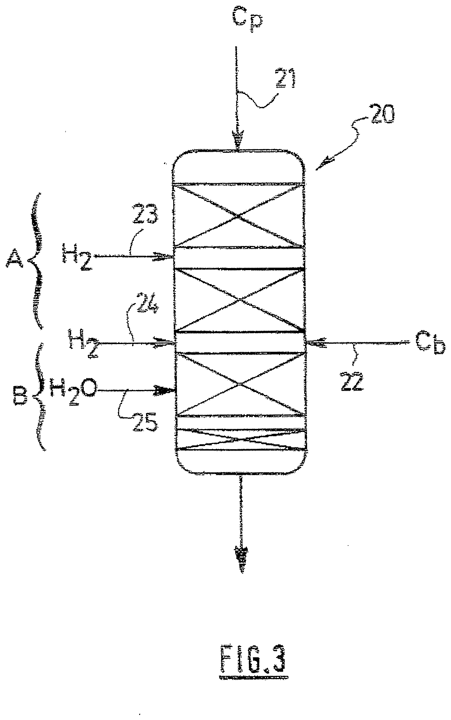

Selon un premier mode de réalisation, une unité d'hydrotraitement catalytique est formée d'un unique réacteur 20, tel que représenté sur la figure 3. Ce réacteur 20 est pourvu d'une première entrée 21 pour l'introduction d'une charge d'origine pétrolière (Cp) de type gazole et une deuxième entrée 22 pour l'introduction d'une charge d'origine biologique (Cb) à base d'huiles végétales et/ou animales, la deuxième entrée 22 étant située en aval de la première entrée 21.

De préférence, l'entrée 21 de la charge d'origine pétrolière est située en tête de réacteur, de manière conventionnelle.

Le réacteur 20 comprend plusieurs lits catalytiques, qui sont répartis en deux zones catalytiques : une première zone située en amont de la deuxième entrée 22, destinée au traitement de la charge d'origine pétrolière, et une deuxième zone B située en aval de cette deuxième entrée 22, destinée au traitement de la charge d'origine biologique.

La première zone catalytique A comportera de préférence un catalyseur favorisant l'hydrodésulfuration de la charge d'origine pétrolière.

La deuxième zone catalytique B comportera de préférence un catalyseur favorisant la déoxygénation de la charge d'origine biologique. Avantageusement, cette zone B comprend au moins un premier lit contenant un catalyseur à base de NiMo et un dernier lit contenant un catalyseur avec une fonction isomérisante permettant d'améliorer les propriétés à froid du produit.

Par ailleurs, le réacteur 20 comprend une entrée 23 pour l'introduction d'hydrogène H₂ au niveau de la première zone catalytique A, et de préférence, une deuxième entrée 24 d'introduction de l'hydrogène H₂, au niveau de la deuxième zone catalytique B, ces injections de H₂ servant de quench gazeux.

Enfin, on pourra prévoir une entrée 25 pour l'introduction d'eau au niveau de la zone catalytique B, cette injection B permettant de favoriser la transformation du CO éventuellement formé en CO₂.

Le réacteur formant l'unité d'hydrotraitement catalytique 20 peut être utilisé dans une unité d'hydroraffinage classique telle que celle décrite en référence à la figure 1, en remplacement du réacteur 2 de cette unité.

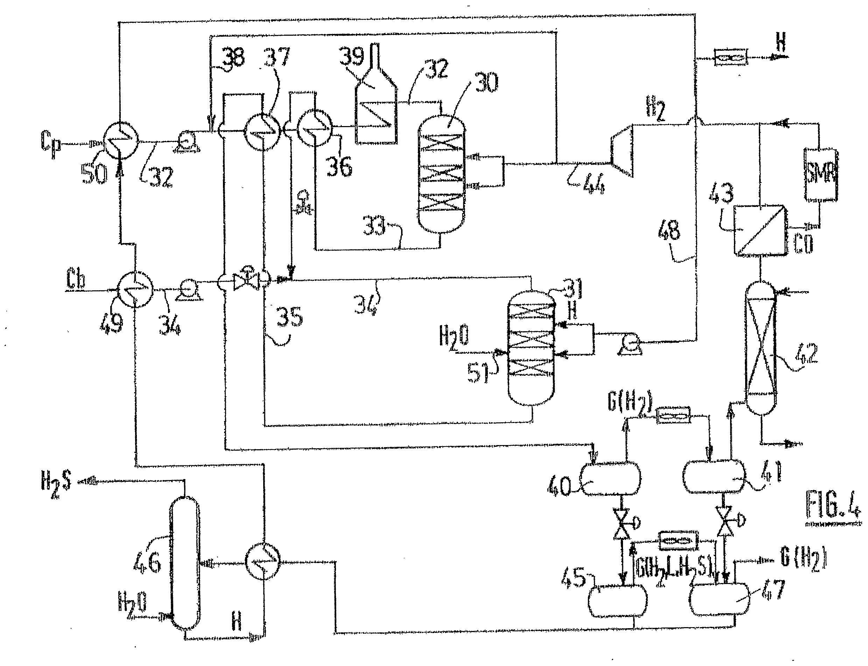

Selon un deuxième mode de réalisation, une unité d'hydrotraitement catalytique est formée de deux réacteurs 30, 31. La figure 4 représente une unité d'hydroraffinage équipée d'une telle unité d'hydrotraitement catalytique.

Le schéma de cette unité d'hydroraffinage est très proche de celui de l'unité représentée sur la figure 1.

Le premier réacteur 30 de l'unité d'hydrotraitement catalytique est de préférence identique au réacteur 2 de la figure 1. La charge d'origine pétrolière Cp est amenée en tête de ce réacteur au moyen d'une ligne 32, mais l'effluent liquide sortant de ce premier réacteur, au lieu d'être dirigé vers une section de séparation, est envoyé en tête du deuxième réacteur 31 au moyen d'une ligne 33.

Une ligne 34 amenant la charge d'origine biologique Cb rejoint la ligne 33 avant son entrée en tête du deuxième réacteur 31.

Une ligne 35 récupère l'effluent liquide en sortie du deuxième réacteur 31 et le conduit à une section de séparation.

De même que pour une unité classique, un échangeur de chaleur 36 est placé en aval du premier réacteur 30 sur la ligne 33 afin de chauffer la charge Cp circulant dans la ligne 32, en amont du premier réacteur 30.

De préférence, l'unité d'hydroraffinage comprend en plus un deuxième échangeur de chaleur 37 placé en aval du deuxième réacteur 31 sur la ligne 35, et chauffant également la charge Cp circulant en amont du premier réacteur 30, ce deuxième échangeur 37 étant par exemple placé en amont du premier échangeur 36.

En amont de ces échangeurs de chaleur 36 et 37, une ligne 38 raccordée sur la ligne 32, apporte à la charge Cp à traiter, un gaz riche en H₂.

En aval des échangeurs de chaleur 36, 37 et en amont du premier réacteur 30, la charge d'origine pétrolière mélangée au gaz riche en H₂ circulant dans la ligne 32 est chauffée par un four 39.

A la sortie du deuxième réacteur 31, l'effluant liquide est refroidi, puis séparé dans une section de séparation qui comprend un premier ballon séparateur « chaud » 40 haute pression qui permet de séparer de l'effluent un gaz G(H₂) riche en hydrogène et contenant également du CO et du CO₂. Ce gaz G(H₂) est conduit dans un autre ballon séparateur « froid » basse pression 41 , puis amené dans une unité 42 de traitement et de séparation du CO₂, par exemple un absorbeur aux amines, puis dans une unité 43 de séparation et de traitement du CO, du type PSA. Le CO séparé dans cette unité 43, ainsi que les autres gaz séparés tels que CH₄, C₂H₆, C₃H₈... peuvent être avantageusement envoyés vers une unité SMR pour la production d'hydrogène H₂. Cet hydrogène peut alors être éventuellement renvoyé dans la ligne 44 ramenant le gaz de recycle dans le premier réacteur 30 en tant que quench gazeux, et dans la ligne 38 pour le traitement de la charge Cp.

L'effluent liquide sortant du premier ballon séparateur 40 est, quant à lui, dirigé vers un autre ballon séparateur basse pression 45 (10 bars) qui sépare les phases liquide et vapeur obtenues par détente du liquide provenant du ballon haute pression 40. Le gaz G(H₂, L, H₂S) obtenu contient principalement de l'hydrogène, des hydrocarbures légers et une grande partie de l'hydrogène sulfuré qui s'est formé dans le réacteur. L'effluent liquide issu de ce ballon 45 est conduit dans un stripeur 46 à vapeur d'eau dont la fonction est d'éliminer les hydrocarbures légers et l'H₂S résiduel de la charge traitée. L'effluent gazeux sortant du ballon 45 peut être envoyé vers un autre ballon 47, alimenté par l'effluent liquide sortant du ballon 41, et dont l'effluent liquide est également conduit dans le stripeur 46. Le gaz sortant de ce ballon 47 peut être exploité.

Le produit hydroraffiné H est soutiré en fond de ce stripeur 46.

L'unité de séparation décrite ci-dessus et composée des ballons 40, 41, 45 et 47, du stripeur 46 et des unités de traitement 42, 43, peut bien entendu être utilisée en sortie du réacteur unique décrit à la figure 3. Selon les conditions, on peut également prévoir seulement deux ballons séparateurs successifs 40 et 41 dont les effluents liquides sont dirigés directement vers le stripeur 46.

Une partie du produit hydroraffiné H peut être introduite dans le deuxième réacteur via une ligne 48 afin de servir de quench liquide. Des échangeurs de chaleurs 49, 50 placés respectivement sur les lignes 34 et 32 peuvent servir au préchauffage de la charge d'origine biologique et de la charge d'origine pétrolière respectivement.

De même que dans le précédent mode de réalisation à un réacteur, on peut prévoir une injection d'eau 51 dans le deuxième réacteur 31.

Cette unité permet ainsi d'effectuer l'hydroraffinage des coupes pétrolières dans le premier réacteur 30 et d'effectuer une finition de l'hydroraffinage des coupes pétrolières dans le deuxième réacteur 31, ainsi que la déoxygénation des triglycérides de la charge d'origine biologique.

Il apparaît en outre clairement que le deuxième réacteur peut être facilement isolé du circuit au moyen de vannes, une conduite de dérivation amenant directement l'effluent liquide sortant du premier réacteur vers les dispositifs de séparation et de traitement. Ainsi, cette unité d'hydroraffinage peut être utilisée pour l'hydrotraitement d'une charge d'origine pétrolière avec ou sans ajout d'une charge d'origine biologique.

Les exemples suivants illustrent les avantages produits par le procédé selon l'invention.

### Exemples

### Charge étudiée

La charge à base de gazole étudiée est composée de 30 % de LCO (« Light Cycle Oil ») et de 70% de coupes de type gazole provenant de la distillation directe (ou straight-run (SR) selon la dénomination anglaise) d'un pétrole brut. Les caractéristiques de cette charge gazole ainsi que celles de l'huile de palme incorporée à environ 15 % poids sont reportées dans les tableaux 1 et 2 respectivement.

**Tableau 1 : caractéristiques de la charge gazole**

| | |
|---|---|
| Densité à 15°C | 0.8685 |
| Teneur en soufre (ppm) | 6570 |
| Dont soufre réfractaire (dibenzothiophène ou composés plus lourds) (% poids) | 80 % |
| Teneur en azote basique (ppm) | 23 |
| Point de trouble (°C) | -4 |
| Indice de Cétane calculé (ASTM D 4737) | 47 |

| Température de distillation de | |
|---|---|
| 5% | 240 |
| 20% | 259 |
| 50% | 285 |
| 80% | 319 |
| 95% | 344 |
| du gazole (°C, ASTM D 86) | |
| Teneur en polyaromatiques (% en poids) | 14.8 |
| Teneur totale en aromatiques (% en poids) | 31.6 |

**Tableau 2 : caractéristiques de l'huile de palme**

| | | |
|---|---|---|
| Densité à 15°C | | 0,8956 |

| Composition en acide (pourcentages en poids) | | |
|---|---|---|
| Acide laurique | 12 : 0 | 0,2 |
| Acide myristique | 14 : 0 | 1,1 |
| Acide palmitique | 16 : 0 | 45,7 |
| Acide palmitoléique | 16 : 1 | 0,2 |
| Acide margarique | 17 : 0 | 0,1 |
| | 17 : 1 | <0,1 |
| Acide stéarique | 18 : 0 | 4,3 |
| Acide oléique | 18 : 1 | 37,7 |
| Acide linoléique | 18 : 2 | 9,8 |
| Acide linolénique | 18 : 3 | 0,2 |
| Acide arachidique | 20 : 0 | 0,4 |
| Acide gondoïque | 20 : 1 | 0,1 |
| | | |

| GPC : | | |
|---|---|---|
| Acides gras libres | | 0,7 |
| Monoglycérides | | <0,1 |
| Diglycérides | | 7,1 |
| Triglycérides | | 92,0 |
| Non indentifié | | 0,2 |

| Teneur en éléments (ppm) | | |
|---|---|---|
| Phosphore | | 0,5 |
| Calcium | | <0,2 |
| Cuivre | | <0,08 |
| Fer | | 0,04 |
| Magnésium | | <0,02 |
| Sodium | | <0,1 |

### Installation et conditions opérationnelles

Dans l'exemple 1, qui sert de référence, le traitement se fait sur une unité comportant un seul réacteur d'hydrotraitement, dans lequel le volume de catalyseur est de 54,6 m³. L'alimentation simultanée d'huile de palme et de la charge à base de gazole se fait en tête de réacteur. La pression partielle d'hydrogène est de 63 bars, et la température moyenne de traitement est de 362°C. Cette température permet d'assurer une teneur en soufre de 10 ppm à partir de la charge traitée ici.

Dans l'exemple 2, selon l'invention, le traitement se fait sur une unité comportant deux réacteurs d'hydrotraitement. La charge à base de gazole est incorporée en tête du premier réacteur, et la charge à base d'huile de palme est incorporée à l'effluent du premier réacteur, avant l'entrée dans le deuxième réacteur. Le volume global de catalyseur dans l'unité est de 54,6 m³ (identique à celui de l'exemple 1). La température moyenne de réaction du deuxième réacteur est de 321°C, et celle du premier réacteur est telle que l'unité (ensemble des deux réacteurs en série) permet d'assurer une teneur en soufre de 10 ppm à partir de la charge traitée ici.

Dans l'exemple 3, selon l'invention, le traitement se fait également sur une unité comportant deux réacteurs d'hydrotraitement. La charge à base de gazole est incorporée en tête du premier réacteur, et la charge à base d'huile de palme est incorporée à l'effluent du premier réacteur, avant l'entrée dans le deuxième réacteur. Le volume global de catalyseur de 47,4 m³. La température moyenne de réaction dans le premier réacteur est de 362°C (identique à celle de l'exemple 1) et celle du deuxième réacteur est de 321°C, ce qui permet à l'unité (ensemble des deux réacteurs en série) d'assurer une teneur en soufre de 10 ppm à partir de la charge traitée ici.

Les réacteurs contiennent un catalyseur commercial d'hydrodésulfuration connu par l'homme du métier, constitué d'alumine poreuse sur laquelle sont déposés des oxydes de nickel et de molybdène. Ce catalyseur se présente sous la forme d'extrudés de 1 à 2 mm de diamètre de forme trilobé. La densité de chargement est de 950 kg/m³ de catalyseur chargé dans l'unité.

La pression partielle d'hydrogène à l'entrée du premier réacteur est de 63 bars. La couverture d'hydrogène utilisée, dans le premier réacteur, pour les exemples exposés est de 350 N1/1 (c'est-à-dire la quantité de normolitres d'hydrogène par litre de charge).

Une section de strippage de l'effluent liquide est présente à la sortie du réacteur afin d'éliminer les gaz tels que H₂S, NH₃, CO, CO₂ lorsque ces composés sont présents dans l'effluent.

Le tableau 3 résume les conditions opératoires de l'unité utilisée.

**Tableau 3: Conditions Opératoires pour l'obtention d'un gazole à 10 ppm de soufre**

| | Exemple 1 | Exemple 2 | Exemple 3 |
|---|---|---|---|
| Débit de la charge gazole (m³/h) | 47.7 | 47.7 | 47.7 |
| Débit de la charge d'huile de palme (m³/h) | 6.9 | 6.9 | 6.9 |
| ***Réacteur 1*** | | | |
| Volume de catalyseur (m³) | 54.6 | 36.6 | 29.4 |
| Température moyenne de réaction (°C) | 362 | 357 | 362 |
| VVH (h⁻¹) | 1 | 1.31 | 1.62 |
| Couverture d'hydrogène (N1/1) | 350 | 350 | 350 |
| Teneur en soufre de l'effluent | 10 | 25 | 25 |
| ***Réacteur 2*** | | | |
| Volume de catalyseur (m³) | | 18 | 18 |
| Température moyenne de réaction (°C) | | 321 | 321 |
| Couverture d'hydrogène (N1/1) | | 300 | 300 |
| VVH (h⁻¹) | | 3 | 3 |
| Teneur en soufre de l'effluent | | 10 | 10 |
| Volume total de catalyseur dans l'unité | 54.6 | 54.6 | 47.4 |

La comparaison des exemples 1 et 2, montre qu'en utilisant le même volume catalytique (54.6 m³), la mise en oeuvre de l'invention permet de faire fonctionner le premier réacteur à la température de 357°C, au lieu de 362°C dans le cas de l'exemple 1. Cette différence de 5°C a pour conséquence de réaliser un gain énergétique considérable, d'autant plus qu'une partie de la chaleur est récupérée de l'effluent du premier réacteur. De plus, les conditions étant moins sévères, la durée de cycle s'en trouve allongée. Dans ce cas, on peut s'attendre à avoir une durée de cycle allongée d'au moins 5 mois. De plus, le deuxième réacteur, dans l'exemple 2, sera caractérisé par une durée de cycle très longue, du fait de la température de fonctionnement peu élevée, et néanmoins suffisante à obtenir un gazole à 10 ppm en sortie.

La comparaison des exemples 1 et 3, montre qu'à une température réactionnelle moyenne pour le premier réacteur, le volume catalytique nécessaire pour obtenir un gazole à 10 ppm en sortie, est moins élevé lorsque est mise en œuvre l'invention. En effet, le gain sur la première zone catalytique est de 7.2 m³ de volume de catalyseur, ce qui implique une baisse de 13 % du volume total de catalyseur pour l'unité. De plus, le deuxième réacteur, dans l'exemple 2, sera caractérisé par une durée de cycle très longue, du fait de la température de fonctionnement peu élevée, et néanmoins suffisante à obtenir un gazole à 10 ppm en sortie.

### Production de CO, CO₂, CH₄ et H₂O

Le tableau 4 illustre la production, en sortie de l'unité, des gaz CO, CO₂, CH₄ et H₂O, par rapport à la charge d'huile de palme étudiée.

**Tableau 4 : Production, en sortie de l'unité, de CO, CO₂, CH₄ et H₂O par rapport à la charge d'huile de palme étudiée**

| | Exemple 1 | | Exemples 2 et 3 | |
|---|---|---|---|---|
| | %mol | %pds | %mol | %pds |
| CO | 1.1 | 3.7 | 2.2 | 7.6 |
| CO₂ | 1.2 | 6.3 | 1.1 | 5.8 |
| CH₄ | 1.0 | 1.9 | 0.5 | 0.9 |
| H₂O | 2.4 | 5.1 | 1.5 | 3.1 |

Le tableau 4 démontre que la mise en œuvre de l'invention présente l'avantage d'une diminution de la consommation d'hydrogène H₂. En effet, la formation de méthane (CH₄) et d'eau (H₂O) est diminuée.

### Qualité des produits

Le tableau 5 regroupe les résultats d'une analyse détaillée de l'effluent obtenu pour les exemples 2 et 3. L'incorporation d'huile de palme en charge d'une unité d'hydrodésulfuration, tant par incorporation simultanée en tête de réacteur, que par mise en œuvre de l'invention, a pour conséquence d'ajouter des normales paraffines dans le produit final, et les caractéristiques des produits obtenus s'en trouvent favorablement affectées. En particulier, on constate que le point de trouble des effluents est de -3°C, alors qu'on aurait pu s'attendre, avec l'incorporation de 15 % d'huile de palme à la charge gazole, à un plus grand impact sur le point de trouble.

**Tableau 5 : caractéristiques des effluents des exemples 2 et 3**

| | |
|---|---|
| Densité à 15°C | 0.8436 |
| Soufre (ppm) | 10 |
| Point de trouble (°C) | -3 |
| TLF (°C) | -8 |
| Indice cétane calculé | 59 |
| GPC (triglycérides) (% poids) | <0,05 |
| Température de distillation (°C, ASTM D86) | |
| 5% (% de produit distillé) | 236 |
| 20% | 262 |
| 50% | 288 |
| 80% | 315 |
| 95% | 343 |
| Teneur en polyaromatiques (% en poids) | 6.2 |

## Revendications

1. Procédé d'hydrotraitement catalytique d'une charge d'origine pétrolière de type gazole et d'une charge d'origine biologique à base d'huiles végétales et/ou graisses animales dans une unité d'hydrotraitement en lit fixe, ledit procédé étant **caractérisé en ce que** la charge d'origine pétrolière est introduite dans ladite unité en amont de la charge d'origine biologique et en que la vitesse spatiale WH de la charge d'origine pétrolière est inférieure à la vitesse spatiale de la charge d'origine biologique, en mélange avec l'effluent issu du traitement de la charge d'origine pétrolière.

2. Procédé d'hydrotraitement selon la revendication 1, **caractérisé en ce que** la charge d'origine pétrolière est injectée dans une première zone catalytique de l'unité d'hydrotraitement et **en ce que** la charge d'origine biologique est injectée dans une deuxième zone catalytique de l'unité d'hydrotraitement située en aval de la première zone catalytique.

3. Procédé d'hydrotraitement selon les revendications 1 ou 2, **caractérisé en ce que** l'unité d'hydrotraitement est formée d'un unique réacteur dans lequel les charges d'origine pétrolière et biologique sont injectées.

4. Procédé d'hydrotraitement selon les revendications 1 ou 2, **caractérisé en ce que** l'unité d'hydrotraitement est formée de deux réacteurs distincts, et **en ce que** la charge d'origine pétrolière est injectée dans le premier réacteur, et la charge d'origine biologique est injectée dans le deuxième réacteur en mélange avec l'effluent liquide sortant du premier réacteur.

5. Procédé d'hydrotraitement selon les revendications 1 ou 2, **caractérisé en ce que** l'unité d'hydrotraitement est formée de deux réacteurs distincts, et **en ce que** la charge d'origine pétrolière est injectée dans le premier réacteur, et que la charge d'origine biologique est injectée pour partie dans le premier réacteur, et pour partie dans le deuxième réacteur, et **en ce que** l'effluent liquide sortant du premier réacteur est injecté dans le deuxième réacteur.

6. Procédé d'hydrotraitement selon l'une des revendications précédentes, dans lequel la charge d'origine pétrolière de type gazole est choisie parmi les coupes gazole provenant de la distillation d'un pétrole brut et/ou d'un brut synthétique issu du traitement des schistes bitumineux ou de pétroles bruts lourds et extra-lourds ou de l'effluent du procédé Fischer Tropsch, les coupes gazoles issues de différents procédés de conversion, en particulier, celles issues du craquage catalytique et/ou thermique tel que FCC, cokéfaction, viscoréduction, et/ou les huiles végétales contenues dans la charge d'origine biologique sont choisies parmi l'huile de palme, l'huile de soja, l'huile de colza, l'huile de tournesol, l'huile de lin, l'huile de son de riz, l'huile de maïs, l'huile d'olive, l'huile de ricin, l'huile de sésame, l'huile de pin, l'huile d'arachide, l'huile de palmiste, l'huile de coco, l'huile de babasu, de préférence l'huile de palme, , ou un mélange de deux ou plusieurs de ces huiles.

7. Procédé d'hydrotraitement selon l'une des revendications précédentes, dans lequel le taux de la charge d'origine biologique à base d'huiles végétales et/ou de graisses animales est jusqu'à 30% en masse, de préférence inférieur ou égal à 15 % en masse.

8. Procédé d'hydrotraitement selon l'une des revendications précédentes dépendant de la revendication 2, dans lequel la zone catalytique d'injection de la charge d'origine biologique comprend un premier lit catalytique piège à métaux.

9. Procédé d'hydrotraitement catalytique selon l'une des revendications précédentes, comprenant un traitement de gaz de recycle issu de l'hydrotraitement de la charge totale avant sa réinjection dans l'unité d'hydrotraitement, dans lequel on effectue un traitement supplémentaire du monoxyde de carbone présent dans ledit gaz de recycle, et dans lequel on traite le monoxyde de carbone au moyen d'une unité de conversion de CO utilisant la réaction de « CO shift ».

10. Procédé d'hydrotraitement catalytique selon l'une des revendications précédentes dépendant de la revendication 2,
dans lequel la quantité d'hydrogène introduite dans la première zone catalytique est de 50 à 1000 Normolitres de H₂ par litre de charge d'origine pétrolière, préférentiellement de 100 à 500 Normolitres de H₂ par litre de charge pétrolière, et encore plus préférentiellement de 120 à 450 Normolitres de H₂ par litre de charge d'origine pétrolière,
et/ou dans lequel la quantité d'hydrogène introduite dans la deuxième zone catalytique est de 50 à 2000 Normolitres de H₂ par litre de charge totale, correspondant à la charge d'origine biologique en mélange avec l'effluent issu du traitement de la charge d'origine pétrolière, préférentiellement de 150 à 1500 Normolitres de H₂ par litre de charge totale, et encore plus préférentiellement de 200 à 1000 Normolitres de H₂ par litre de charge totale.

11. Procédé d'hydrotraitement catalytique selon l'une des revendications précédentes dépendant de la revendication 2, dans lequel la température de la première zone catalytique de traitement de la charge d'origine pétrolière est de 320 à 420°C, de préférence de 340 à 400°C et/ou dans lequel la température de la deuxième zone catalytique de traitement de la charge d'origine biologique en mélange avec l'effluent issu du traitement de la charge d'origine pétrolière est de 250 à 420°C, de préférence de 280 à 350°C.

12. Procédé d'hydrotraitement catalytique selon l'une des revendications précédentes, dans lequel les différentes charges sont traitées à une pression de 25 à 150 bars, de préférence de 30 à 70 bars.

13. Procédé d'hydrotraitement catalytique selon l'une des revendications précédentes dépendant de la revendication 2, dans lequel la WH de la charge d'origine pétrolière, dans la première zone catalytique est de 0.3 à 5, de préférence de 0.6 à 3 et/ou dans lequel la WH, dans la deuxième zone catalytique, de la charge totale, correspondant à la charge d'origine biologique en mélange avec l'effluent issu du traitement de la charge d'origine pétrolière, est de 0.5 à 10, de préférence de 1 à 5.

14. Procédé d'hydrotraitement catalytique selon l'une des revendications précédentes, dans lequel, la charge d'origine biologique traverse au moins un lit catalytique dans l'unité d'hydrotraitement, le lit catalytique contenant au moins un catalyseur à base d'oxydes métalliques choisis parmi les oxydes des métaux du groupe VI-B et VIII-B supportés sur un support choisi parmi l'alumine, silice alumine, zéolithe, ferrierite, alumine phosphatée, silice alumine phosphatée...de préférence, du NiMo, CoMo, NiW, PtPd, ou un mélange de deux ou plusieurs de ceux-ci.

15. Procédé d'hydrotraitement catalytique selon l'une des revendications précédentes, dans lequel on traite la charge d'origine biologique introduite dans l'unité d'hydrotraitement sur au moins un lit catalytique contenant au moins pour partie un catalyseur avec une fonction isomérisante, de préférence à base d'oxydes de nickel sur un support acide tel que silice alumine amorphe, zéolithe, ferrierite, alumine phosphatée, silice alumine phosphatée...

16. Procédé d'hydrotraitement catalytique selon l'une des revendications précédentes, dans lequel on injecte de l'eau au niveau de la zone de traitement de la charge d'origine biologique.

17. Procédé d'hydrotraitement catalytique selon la revendication 9,
- dans lequel on sépare le monoxyde de carbone CO, et éventuellement le méthane CH₄, l'éthane C₂H₆, le propane C₃H₈... au moyen d'une unité de traitement PSA,
- dans lequel le monoxyde de carbone CO séparé, et éventuellement le méthane CH₄, l'éthane C₂H₆, le propane C₃H₈ séparés sont utilisés dans un vaporéformeur, tel qu'un vaporéformeur de méthane SMR, et
- dans lequel on effectue en outre un traitement au cours duquel on sépare et on traite le dioxyde de carbone CO₂ et l'hydrogène sulfuré H₂S présents dans ledit gaz de recycle avant sa réinjection dans ladite unité d'hydrotraitement.

18. Procédé d'hydrotraitement catalytique selon l'une des revendications précédentes, dans lequel on contrôle l'exothermicité de l'hydrotraitement de la charge d'origine biologique au moyen de systèmes de régulation thermique et dans lequel le système de régulation thermique consiste en l'ajout d'un liquide au niveau de la zone de traitement de la charge d'origine biologique.

19. Procédé d'hydrotraitement catalytique selon la revendication 18 dépendant de la revendication 4 ou 5, dans lequel le système de régulation thermique consiste à récupérer de la chaleur de l'effluent sortant du premier réacteur afin d'abaisser sa température avant son injection dans le deuxième réacteur.

20. Procédé d'hydrotraitement catalytique selon l'une des revendications précédentes, dans lequel l'unité d'hydrotraitement fonctionne en une passe, sans recycle d'effluent liquide en tête de l'unité d'hydrotraitement.

## Patentansprüche

1. Katalytisches Hydrotreating-Verfahren für einen Einsatzstoff mineralölischen Ursprungs vom Dieseltyp und einen Einsatzstoff biologischen Ursprungs auf der Basis pflanzlicher Öle und/oder tierischer Fette in einer Festbett-Hydrotreating-Einheit, wobei das Verfahren **dadurch gekennzeichnet ist, dass** der Einsatzstoff mineralölischen Ursprungs stromauf des Einsatzstoffs biologischen Ursprungs in die Einheit eingebracht wird und dass die Raumgeschwindigkeit WH des Einsatzstoffs mineralölischen Ursprungs geringer ist als die Raumgeschwindigkeit des Einsatzstoffs biologischen Ursprungs im Gemisch mit dem bei der Behandlung des Einsatzstoffs mineralölischen Ursprungs anfallenden Abwasser.

2. Hydrotreating-Verfahren nach Anspruch 1, **dadurch gekennzeichnet, dass** der Einsatzstoff mineralölischen Ursprungs in eine erste katalytische Zone der Hydrotreating-Einheit eingespritzt wird und dass der Einsatzstoff biologischen Ursprungs in eine zweite katalytische Zone der Hydrotreating-Einheit eingespritzt wird, die stromab der ersten katalytischen Zone gelegen ist.

3. Hydrotreating-Verfahren nach den Ansprüchen 1 oder 2, **dadurch gekennzeichnet, dass** die Hydrotreating-Einheit aus einem einzigen Reaktor gebildet ist, in den die Einsatzstoffe mineralölischen und biologischen Ursprungs eingespritzt werden.

4. Hydrotreating-Verfahren nach den Ansprüchen 1 oder 2, **dadurch gekennzeichnet, dass** die Hydrotreating-Einheit aus zwei verschiedenen Reaktoren gebildet ist und dass der Einsatzstoff mineralölischen Ursprungs in den ersten Reaktor eingespritzt wird und der Einsatzstoff biologischen Ursprungs in den zweiten Reaktor im Gemisch mit dem aus dem ersten Reaktor austretenden flüssigen Abwasser eingespritzt wird.

5. Hydrotreating-Verfahren nach den Ansprüchen 1 oder 2, **dadurch gekennzeichnet, dass** die Hydrotreating-Einheit aus zwei verschiedenen Reaktoren gebildet ist und dass der Einsatzstoff mineralölischen Ursprungs in den ersten Reaktor eingespritzt wird und dass der Einsatzstoff biologischen Ursprungs zum Teil in den ersten Reaktor und zum Teil in den zweiten Reaktor eingespritzt wird und dass das aus dem ersten Reaktor austretende flüssige Abwasser in den zweiten Reaktor eingespritzt wird.

6. Hydrotreating-Verfahren nach einem der vorhergehenden Ansprüche, wobei der Einsatzstoff mineralölischen Ursprungs vom Dieseltyp aus den Dieselschnitten, die aus der Destillation eines Rohöls und/oder eines synthetischen Rohstoffs, der bei der Behandlung von Ölschiefern oder schweren und extraschweren Rohölen oder dem Abwasser des Fischer-Tropsch-Verfahrens anfällt, hervorgehen, den Dieselschnitten, die bei verschiedenen Konversionsverfahren anfallen, insbesondere denen, die beim katalytischen und/oder thermisches Cracken wie FCC, Verkokung, Visbreaking anfallen, gewählt ist und/oder die im Einsatzstoff biologischen Ursprungs enthaltenen pflanzlichen Öle aus Palmöl, Sojaöl, Rapsöl, Sonnenblumenöl, Leinöl, Reiskleieöl, Maisöl, Olivenöl, Rizinusöl, Sesamöl, Pinienöl, Erdnussöl, Palmkernöl, Kokosöl, Babasuöl, bevorzugt Palmöl, oder einem Gemisch aus zwei oder mehreren dieser Öle gewählt sind.

7. Hydrotreating-Verfahren nach einem der vorhergehenden Ansprüche, wobei der Anteil des Einsatzstoffs biologischen Ursprungs auf der Basis pflanzlicher Öle und/oder tierischer Fette bis zu 30 Gew.-% beträgt, bevorzugt kleiner als oder gleich 15 Gew.-% ist.

8. Hydrotreating-Verfahren nach einem der vorhergehenden Ansprüche in Abhängigkeit von Anspruch 2, wobei die katalytische Einspritzzone des Einsatzstoffs biologischen Ursprungs ein erstes katalytische Bett als Metallfalle umfasst.

9. Katalytisches Hydrotreating-Verfahren nach einem der vorhergehenden Ansprüche, umfassend eine Behandlung von Recyclegas, das beim Hydrotreating des Gesamteinsatzstoffs vor seinem Wiedereinspritzen in die Hydrotreating-Einheit anfällt, wobei eine zusätzliche Behandlung des im Recyclegas vorhandenen Kohlenmonoxids erfolgt und wobei das Kohlenmonoxid mittels einer CO-Konversionseinheit unter Verwendung der "CO-Shift"-Reaktion behandelt wird.

10. Katalytisches Hydrotreating-Verfahren nach einem der vorhergehenden Ansprüche in Abhängigkeit von Anspruch 2,
wobei die in die erste katalytische Zone eingebrachte Wasserstoffmenge 50 bis 1000 Normliter H₂ je Liter Einsatzstoff mineralölischen Ursprungs, bevorzugt 100 bis 500 Normliter H₂ je Liter mineralölischen Einsatzstoffs und noch bevorzugter 120 bis 450 Normliter H₂ je Liter Einsatzstoff mineralölischen Ursprungs beträgt,
und/oder wobei die in die zweite katalytische Zone eingebrachte Wasserstoffmenge 50 bis 2000 Normliter H₂ je Liter Gesamteinsatzstoff, entsprechend dem Einsatzstoff biologischen Ursprungs im Gemisch mit dem bei der Behandlung des Einsatzstoffs mineralölischen Ursprungs anfallenden Abwasser, bevorzugt 150 bis 1500 Normliter H₂ je Liter Gesamteinsatzstoff und noch bevorzugter 200 bis 1000 Normliter H₂ je Liter Gesamteinsatzstoff beträgt.

11. Katalytisches Hydrotreating-Verfahren nach einem der vorhergehenden Ansprüche in Abhängigkeit von Anspruch 2 wobei die Temperatur der ersten katalytischen Zone zur Behandlung des Einsatzstoffs mineralölischen Ursprungs 320 bis 420 °C, bevorzugt 340 bis 400 °C beträgt und/oder wobei die Temperatur der zweiten katalytischen Zone zur Behandlung des Einsatzstoffs biologischen Ursprungs im Gemisch mit dem bei der Behandlung des Einsatzstoffs mineralölischen Ursprungs anfallenden Abwasser 250 bis 420 °C, bevorzugt 280 bis 350 °C beträgt.

12. Katalytisches Hydrotreating-Verfahren nach einem der vorhergehenden Ansprüche, wobei die verschiedenen Einsatzstoffe bei einem Druck von 25 bis 150 bar, bevorzugt 30 bis 70 bar behandelt werden.

13. Katalytisches Hydrotreating-Verfahren nach einem der vorhergehenden Ansprüche in Abhängigkeit von Anspruch 2, wobei die WH des Einsatzstoffs mineralölischen Ursprungs in der ersten katalytischen Zone 0,3 bis 5, bevorzugt 0,6 bis 3 beträgt und/oder wobei die VVH in der zweiten katalytischen Zone des Gesamteinsatzstoffs, entsprechend dem Einsatzstoff biologischen Ursprungs im Gemisch mit dem bei der Behandlung des Einsatzstoffs mineralölischen Ursprungs anfallenden Abwasser, 0,5 bis 10, bevorzugt 1 bis 5 beträgt.

14. Katalytisches Hydrotreating-Verfahren nach einem der vorhergehenden Ansprüche, wobei der Einsatzstoff biologischen Ursprungs mindestens ein katalytisches Bett in der Hydrotreating-Einheit durchläuft, wobei das katalytische Bett mindestens einen Katalysator auf der Basis von Metalloxiden enthält, die aus den Oxiden der Metalle der Gruppen VI-B und VIII-B gewählt sind, die auf einem Träger getragen werden, der aus Aluminiumoxid, Siliciumdioxid-Aluminiumoxid, Zeolith, Ferrierit, phosphatiertem Aluminiumoxid, phosphatiertem Siliciumdioxid-Aluminiumoxid ... bevorzugt NiMo, CoMo, NiW, PtPd oder einem Gemisch aus zwei oder mehreren davon gewählt ist.

15. Katalytisches Hydrotreating-Verfahren nach einem der vorhergehenden Ansprüche, wobei der in die Hydrotreating-Einheit eingebrachte Einsatzstoff biologischen Ursprungs auf mindestens einem katalytischen Bett behandelt wird, das mindestens zum Teil einen Katalysator mit einer isomerisierenden Funktion enthält, bevorzugt auf der Basis von Nickeloxiden auf einem sauren Träger wie amorphes Siliciumdioxid, Zeolith, Ferrierit, phosphatiertes Aluminiumoxid, phosphatiertes Siliciumdioxid-Aluminiumoxid ...

16. Katalytisches Hydrotreating-Verfahren nach einem der vorhergehenden Ansprüche, wobei an der Behandlungszone des Einsatzstoffs biologischen Ursprungs Wasser eingespritzt wird.

17. Katalytisches Hydrotreating-Verfahren nach Anspruch 9,
- wobei das Kohlenmonoxid CO und gegebenenfalls das Methan CH₄, das Ethan C₂H₆, das Propan C₃H₈ ... mittels einer PSA-Behandlungseinheit getrennt werden,
- wobei das getrennte Kohlenmonoxid CO und gegebenenfalls das getrennte Methan CH₄, Ethan C₂H₆, Propan C₃H₈ in einem Dampfreformer wie einem Methandampfreformer SMR verwendet werden, und
- wobei ferner eine Behandlung durchgeführt wird, während der das Kohlendioxid CO₂ und den Schwefelwasserstoff H₂S, die im Recyclegas vorhanden sind, vor dessen erneutem Einspritzen in die Hydrotreating-Einheit getrennt und behandelt werden.

18. Katalytisches Hydrotreating-Verfahren nach einem der vorhergehenden Ansprüche, wobei die Exothermizität des Hydrotreatings des Einsatzstoffs biologischen Ursprungs mittels Wärmeregulierungssystemen geregelt wird und wobei das Wärmeregulierungssystem in der Zugabe einer Flüssigkeit im Bereich der Behandlungszone des Einsatzstoffs biologischen Ursprungs besteht.

19. Katalytisches Hydrotreating-Verfahren nach Anspruch 18 in Abhängigkeit von Anspruch 4 oder 5, wobei das Wärmeregulierungssystem darin besteht, Wärme aus dem Abwasser zurückzugewinnen, das aus dem ersten Reaktor austritt, um seine Temperatur vor dem Einspritzen in den zweiten Reaktor zu senken.

20. Katalytisches Hydrotreating-Verfahren nach einem der vorhergehenden Ansprüche, wobei die Hydrotreating-Einheit in einem Durchgang arbeitet, ohne Rückführung von flüssigem Abwasser zum Anfang der Hydrotreating-Einheit.

## Claims

1. A method for the catalytic hydroprocessing of a petroleum feedstock of gas oil type and a biological feedstock comprising vegetable oils and/or animal fats in a fixed-bed hydroprocessing unit, said method being **characterized in that** the petroleum feedstock is introduced into said unit upstream of the biological feedstock and **in that** the HSV space velocity of the petroleum feedstock is less than the space velocity of the biological feedstock, as a mixture with the effluent resulting from the processing of the petroleum feedstock.

2. The method for hydroprocessing according to claim 1, **characterized in that** the petroleum feedstock is injected into a first catalytic region of the hydroprocessing unit and **in that** the biological feedstock is injected into a second catalytic region of the hydroprocessing unit situated downstream of the first catalytic region.

3. The method for hydroprocessing according to claims 1 or 2, **characterized in that** the hydroprocessing unit is formed of a single reactor, into which the petroleum and biological feedstocks are injected.

4. The method for hydroprocessing according to claim 1 or 2, **characterized in that** the hydroprocessing unit is formed of two separate reactors, and **in that** the petroleum feedstock is injected into the first reactor, and the biological feedstock is injected into the second reactor, as a mixture with the liquid effluent leaving the first reactor.

5. The method for hydroprocessing according to claim 1 or 2, **characterized in that** the hydroprocessing unit is formed of two separate reactors, and **in that** the petroleum feedstock is injected into the first reactor, and **in that** the biological feedstock is injected partly into the first reactor and partly into the second reactor, and **in that** the liquid effluent leaving the first reactor is injected into the second reactor.

6. The method for hydroprocessing according to any one of the preceding claims, wherein the petroleum feedstock of gas oil type is selected from gas oil fractions derived from the distillation of a crude oil and/or a synthetic crude resulting from the processing of oil shales of heavy and extra-heavy crude oils, or of the effluent from a Fischer-Tropsch process, gas oil fractions resulting from different conversion processes, in particular those resulting from catalytic and/or thermal cracking, such as FCC, coking, visbreaking, and/or the vegetable oils contained in the biological feedstock are selected from palm oil, soy bean oil, rapeseed oil, sunflower oil, linseed oil, rice bran oil, corn oil, olive oil, castor oil, sesame oil, pine oil, peanut oil, palm kernel oil, coconut oil, babassu oil, preferably palm oil, or a mixture of two or more of these oils.

7. The method for hydroprocessing according to any one of the preceding claims, wherein the level of the biological feedstock comprising vegetable oils and/or animal fats is up to 30% by weight, preferably less than or equal to 15% by weight.

8. The method for hydroprocessing according to any one of the preceding claims dependent on claim 2, wherein the catalytic region for the injection of the biological feedstock comprises a first metal trap catalytic bed.

9. The method for catalytic hydroprocessing according to any one of the preceding claims, comprising a treatment of recycle gas resulting from the hydroprocessing of the total feedstock before it is reinjected into the hydroprocessing unit, wherein an additional processing of the carbon monoxide present in said recycle gas is carried out, and wherein the carbon monoxide is processed by means of a CO conversion unit using the CO shift reaction.

10. The method for catalytic hydroprocessing according to any one of the preceding claims dependent on claim 2,
wherein the amount of hydrogen introduced into the first catalytic region is from 50 to 1000 Normal litres of H₂ per litre of petroleum feedstock, preferably from 100 to 500 Normal litres of H₂ per litre of petroleum feedstock, and even more preferably from 120 to 450 Normal litres of H₂ per litre of petroleum feedstock,
and/or wherein the amount of hydrogen introduced into the second catalytic region is from 50 to 2000 Normal litres of H₂ per litre of total feedstock, corresponding to the biological feedstock mixed with the effluent resulting from the processing of the petroleum feedstock, preferably from 150 to 1500 Normal litres of H₂ per litre of total feedstock, and even more preferably from 200 to 1000 Normal litres of H₂ per litre of total feedstock.

11. The method for catalytic hydroprocessing according to any one of the preceding claims dependent on claim 2, wherein the temperature of the first catalytic region for processing the petroleum feedstock is from 320 to 420°C, preferably from 340 to 400°C and/or wherein the temperature of the second catalytic region for processing the biological feedstock, as a mixture with the effluent resulting from the processing of the petroleum feedstock, is from 250 to 420°C, preferably from 280 to 350°C.

12. The method for catalytic hydroprocessing according to any one of the preceding claims, wherein the different feedstocks are processed at a pressure of 25 to 150 bar, preferably 30 to 70 bar.

13. The method for catalytic hydroprocessing according to any one of the preceding claims dependent on claim 2, wherein the HSV of the petroleum feedstock in the first catalytic region is from 0.3 to 5, preferably from 0.6 to 3 and/or wherein the HSV in the second catalytic region of the total feedstock, corresponding to the biological feedstock, as a mixture with the effluent resulting from the processing of the petroleum feedstock is from 0.5 to 10, preferably from 1 to 5.

14. The method for catalytic hydroprocessing according to any one of the preceding claims, wherein the biological feedstock passes through at least one catalytic bed in the hydroprocessing unit, the catalytic bed containing at least one catalyst based on metal oxides selected from Groups VI-B and VIII-B supported on a support selected from alumina, silica-alumina, zeolite, ferrierite, phosphated alumina, phosphated silica-alumina, etc., preferably NiMo, CoMo, NiW, PtPd or a mixture of two or more thereof.

15. The method for catalytic hydroprocessing according to any one of the preceding claims, wherein the biological feedstock introduced into the hydroprocessing unit is processed over at least one catalytic bed at least partially comprising a catalyst with an isomerizing function, preferably based on nickel oxides on an acidic support such as amorphous silica, zeolite, ferrierite, phosphated alumina, phosphated silica-alumina, etc.

16. The method for catalytic hydroprocessing according to any one of the preceding claims, wherein water is injected at the level of the processing region of the biological feedstock.

17. The method for catalytic hydroprocessing according to claim 9,
- wherein carbon monoxide CO, and optionally methane CH₄, ethane C₂H₆, and propane C₃H₈, etc. are separated by means of a PSA processing unit,
- wherein the separated carbon monoxide CO, and optionally the separated methane CH₄, ethane C₂H₆, or propane C₃H₈ are used in a steam reformer, such as a steam methane reformer (SMR), and
- wherein processing is also carried out during which carbon dioxide CO₂ and hydrogen sulfide H₂S present in said recycle gas are separated and processed before being reinjected into said hydroprocessing unit.

18. The method for catalytic hydroprocessing according to any one of the preceding claims, wherein the exothermicity of the hydroprocessing of the biological feedstock is controlled by means of thermal control systems and wherein the thermal control system consists of adding a liquid to the biological feedstock processing region.

19. The method for catalytic hydroprocessing according to claim 18 dependent on claim 4 or 5, wherein the thermal control system consists of recovering the heat from the effluent leaving the first reactor in order to lower its temperature prior to its injection into the second reactor.

20. The method for catalytic hydroprocessing according to any one of the preceding claims, wherein the hydroprocessing unit operates in a single pass, without recycling of liquid effluent at the top of the hydroprocessing unit.
